# EUROPEAN PATENT SPECIFICATION

(11) **EP 2 208 878 B1**
(45) Date of publication and mention of the grant of the patent: **06.11.2013**
(21) Application number: 10150638.4
(22) Date of filing: 13.01.2010
(51) Int. Cl.: F02D 19/00, F02D 41/00, F02M 25/07

(54) **Exhaust gas recirculation apparatus and method of controlling exhaust gas recirculation apparatus**
Abgasrückführungsvorrichtung und Verfahren zur Steuerung einer Abgasrückführungsvorrichtung
Appareil de recirculation des gaz d'échappement et procédé de commande de l'appareil de recirculation des gaz d'échappement

(30) Priority: 14.01.2009 JP 2009006020
(43) Date of publication of application: 21.07.2010
(73) Proprietor: TOYOTA JIDOSHA KABUSHIKI KAISHA, Toyota-shi, Aichi-ken, 471-8571 (JP)
(72) Inventor: Oota, Hirohiko, Toyota-shi, Aichi-ken 471-8571 (JP); Koga, Katsuki, Toyota-shi, Aichi-ken 471-8571 (JP); Tagami, Yoshihiro, Toyota-shi, Aichi-ken 471-8571 (JP)
(74) Representative: Intès, Didier Gérard André

(56) References cited:
- WO-A1-2004/058534
- JP-A- 60 093 166
- JP-A- 61 085 563
- US-A- 4 757 683
- US-A1- 2008 040 085

## Description

### 1. Field of the Invention

The invention relates to an exhaust gas recirculation apparatus provided in an internal combustion engine provided in a vehicle, and a method of controlling the exhaust gas recirculation apparatus.

### 2. Description of the Related Art

An exhaust gas recirculation apparatus (hereinafter, referred to as "EGR apparatus") has been available. The EGR apparatus introduces EGR gas, which is part of exhaust gas, from an exhaust system to an intake system. For example, an EGR apparatus described in Japanese Patent Application Publication No. 2008-138638 includes a cooling passage that cools EGR gas using an EGR cooler that serves as exhaust gas cooling means, and a bypass passage that bypasses the EGR cooler.

In the EGR apparatus, the amount of the EGR gas passing through the EGR cooler and the amount of the EGR gas passing through the bypass passage in the total amount of the EGR gas are controlled by changing the opening degree of a bypass valve provided in the bypass passage, according to an engine operating state. Thus, the temperature of a catalyst provided in an exhaust passage is maintained at an appropriate high temperature. More specifically, when an engine load is low and an exhaust gas temperature is low, the opening degree of the bypass valve is adjusted to increase the amount of the EGR gas passing through the bypass passage, thereby suppressing a decrease in the exhaust gas temperature. When the engine load is high and the exhaust gas temperature is high, the opening degree of the bypass valve is adjusted to increase the amount of the EGR gas passing through the EGR cooler, thereby suppressing an excessive increase in the exhaust gas temperature.

In a vehicle in which a transmission is provided, when the transmission is performing a shift operation, the transmission is temporarily placed in a neutral state (i.e., a state in which transmission of drive power from an output shaft of the engine to an output shaft of the transmission is interrupted). At this time, an engine output is temporarily decreased to suppress an increase in an engine rotational speed. In this case, the engine load is decreased, and therefore, the opening degree of the bypass valve is decreased in accordance with the decrease in the engine load.

When the transmission is performing the shift operation, the engine load is temporarily decreased. After completion of the shift operation of the transmission, the engine load is increased to a value corresponding to a speed ratio achieved after the gear shift. If the opening degree of the bypass valve is changed each time the transmission performs the shift operation, the bypass valve may be unnecessarily operated. Therefore, for example, durability of the bypass valve may be decreased.

### SUMMARY OF THE INVENTION

The invention provides an exhaust gas recirculation apparatus in which an unnecessary operation of a bypass valve due to a shift operation is suppressed, and a method of controlling the exhaust gas recirculation apparatus.

An aspect of the invention relates to an exhaust gas recirculation apparatus applied to an internal combustion engine connected to a transmission. When the transmission is placed in a neutral state while the transmission is performing a shift operation, an engine load is temporarily decreased. The exhaust gas recirculation apparatus includes an exhaust gas recirculation passage through which part of exhaust gas is introduced from an exhaust system to an intake system, a cooler which is provided in the exhaust gas recirculation passage, and which cools the exhaust gas, a bypass passage through which the exhaust gas is introduced from the exhaust system to the intake system without passing through the cooler, and a bypass valve provided in the bypass passage. An amount of the exhaust gas flowing through the cooler and an amount of the exhaust gas flowing through the bypass passage are adjusted by changing an opening degree of the bypass valve based on the engine load. The exhaust gas recirculation apparatus includes opening degree maintenance means for, if it is determined that the transmission is performing the shift operation, maintaining the opening degree of the bypass valve at an opening degree set immediately before it is determined that the transmission is performing the shift operation.

With the above-described configuration, when the engine load is temporarily decreased while the transmission is performing the shift operation, the opening degree of the bypass valve is maintained at the opening degree set immediately before the transmission performs the shift operation. Accordingly, it is possible to reduce the possibility that the opening degree of the bypass valve is changed each time the transmission performs the shift operation. Thus, it is possible to reduce the possibility that the bypass valve is unnecessarily operated due to the shift operation.

In the exhaust gas recirculation apparatus according to the above-described aspect, when a first condition is satisfied, it may be determined that the transmission is performing the shift operation; and the first condition may be a condition that the transmission is in the neutral state and a vehicle speed is equal to or higher than a predetermined speed.

In the exhaust gas recirculation apparatus according to the above-described aspect, the transmission may be a manual transmission; when a second condition is satisfied, it may be determined that the transmission is performing the shift operation; and the second condition may be a condition that a depression amount of an accelerator pedal is equal to or smaller than a predetermined amount, a vehicle speed is equal to or higher than a predetermined speed, and deceleration fuel cutoff is not being performed.

In the exhaust gas recirculation apparatus according to the above-described aspect, the transmission may be a manual transmission; and when a first condition or a second condition is satisfied, it may be determined that the transmission is performing the shift operation; and the first condition may be a condition that the transmission is in the neutral state and a vehicle speed is equal to or higher than a predetermined speed, and the second condition may be a condition that a depression amount of an accelerator pedal is equal to or smaller than a predetermined amount, a vehicle speed is equal to or higher than a predetermined speed, and deceleration fuel cutoff is not being performed.

When the transmission is performing the shift operation, the transmission is placed in the neutral state. When the transmission is in the neutral state, the engine load is decreased to suppress an increase in the engine rotational speed. Accordingly, when the condition that the transmission is in the neutral state is satisfied, it is possible to determine that the transmission is performing the shift operation. When the transmission is the manual transmission in which a gear is changed according to a shift operation performed by the driver of the vehicle, the transmission may be placed in the neutral state while the vehicle is in the stopped state. Also, when the transmission is the automatic transmission in which the gear is automatically changed according to the traveling state of the vehicle, the transmission may be placed in the neutral state to suppress fuel consumption while the vehicle is in the stopped state. Therefore, it is not possible to determine that the transmission is performing the shift operation using only the condition that "the transmission is in the neutral state". The transmission performs the shift operation when the vehicle is traveling. Therefore, by adding the condition that the vehicle speed is equal to or higher than the predetermined speed, it is possible to avoid an erroneous determination that the transmission is performing the shift operation when the transmission is in the neutral state while the vehicle is in the stopped state. Thus, in the configurations according to the above-described aspect, when the first condition is satisfied, it is determined that the transmission is performing the shift operation. The first condition is the condition that the transmission is in the neutral state, and the vehicle speed is equal to or higher than the predetermined speed, that is, the vehicle is traveling. Accordingly, the opening degree maintenance means maintains the opening degree of the bypass valve in accordance with the temporal decrease in the engine load.

In the case where the transmission is the manual transmission, when the transmission is placed in the neutral state during the gear shift, first, the driver releases the accelerator pedal, and thus, the depression amount of the accelerator pedal is equal to or smaller than the predetermined amount. The depression amount of the accelerator pedal may be equal to or smaller than the predetermined amount, for example, when the vehicle is in the stopped state, and the engine is idling. In contrast, the transmission performs the shift operation when the vehicle is traveling, as described above. Therefore, by adding the condition that the vehicle speed is equal to or higher than the predetermined speed, it is possible to avoid an erroneous determination that the transmission is performing the shift operation when the engine is idling. However, when deceleration fuel cutoff is being performed, the condition that the depression amount of the accelerator pedal is equal to or smaller than the predetermined amount, and the vehicle speed is equal to or higher than the predetermined speed is satisfied. Therefore, it is necessary to determine whether the condition is satisfied due to the deceleration fuel cutoff.

Thus, in the configurations according to the above-described aspect, the second condition is used to determine that the manual transmission is performing the shift operation. The second condition is the condition that the depression amount of the accelerator pedal is equal to or smaller than the predetermined amount, the vehicle speed is equal to or higher than the predetermined speed, and the deceleration fuel cutoff is not being performed. That is, when the second condition is satisfied, it is determined that the manual transmission is performing the shift operation. Thus, the opening degree maintenance means maintains the opening degree of the bypass valve in accordance with the temporal decrease in the engine load.

When the manual transmission is performing the shift operation, the transmission is placed in the neutral state after the depression amount of the accelerator pedal depressed by the driver is decreased to an amount equal to or smaller than the predetermined amount. Therefore, if the opening degree maintenance means starts to maintain the opening degree of the bypass valve after it is detected that the transmission is in the neutral state, the timing, at which the opening degree of the bypass valve starts to be maintained, may lag behind the decrease in the engine load. However, in the configurations according to the above-described aspect, the opening degree of the bypass valve starts to be maintained at a time point at which the decrease in the depression amount of the accelerator pedal is detected. The depression amount of the accelerator pedal is always decreased before the transmission is placed in the neutral state. Thus, it is possible to appropriately reduce the time lag between the timing at which the engine load is decreased and the timing at which the opening degree of the bypass valve starts to be maintained.

In the exhaust gas recirculation apparatus according to the above-described aspect, when a predetermined time has elapsed since start of maintenance of the opening degree of the bypass valve, the opening degree maintenance means may stop the maintenance of the opening degree of the bypass valve.

In the case of the manual transmission, it may take time to perform the shift operation, depending on driver's driving skill level. Thus, the depression amount of the accelerator pedal may remain equal to or smaller than the predetermined amount for a relatively long time, or the transmission may remain in the neutral state for a relatively long time. In this case, the opening degree of the bypass valve is maintained for a relatively long time. The opening degree of the bypass valve is maintained by the opening degree maintenance means to reduce the possibility that the bypass valve is unnecessarily operated due to the temporal decrease in the engine load when the transmission is performing the shift operation. Therefore, it is not preferable that the opening degree of the bypass valve be maintained for a relatively long time. However, in the above-described configuration, there is a limit on the time during which the opening degree of the bypass valve is maintained. Therefore, the opening degree of the bypass valve is appropriately maintained, regardless of the driver's driving skill level.

In the exhaust gas recirculation apparatus according to the above-described aspect, when a state of the transmission is changed from the neutral state to a non-neutral state, the opening degree maintenance means may stop maintenance of the opening degree of the bypass valve.

In the above-described configuration, the maintenance of the opening degree of the bypass valve is stopped when the transmission, which has been temporarily in the neutral state, is brought to the non-neutral state while the transmission is performing the shift operation, that is, when the state of the transmission starts to change so that the transmission starts to shift toward a target gear, and the engine load, which has been temporarily decreased, starts to increase. Thus, in the configuration, it is possible to appropriately set the timing at which the maintenance of the opening degree of the bypass valve is stopped.

In each of the configurations in the above-described aspect, in the case where the transmission is the manual transmission in which the gear is changed according to a shift operation performed by the driver of the vehicle, it is possible to determine that the transmission is in the neutral state by detecting that a clutch pedal is depressed, or by detecting that a shift lever is at the neutral position. Also, in the case where the transmission is the automatic transmission in which the gear is automatically changed according to the engine operating state, it is possible to determine that the transmission is in the neutral state by detecting that a neutral request is output from a control device that executes a shift control for the automatic transmission. It is also possible to determine whether the transmission is in the neutral state by detecting that operating states of valves that are operated to bring the automatic transmission to the neutral state.

In the exhaust gas recirculation apparatus according to the above-described aspect, the internal combustion engine may be a diesel engine. In the diesel engine, if the opening degree of the bypass valve is adjusted to increase the amount of the EGR gas passing through the bypass passage due to the temporal decrease in the engine load caused by the shift operation, after the opening degree of the bypass valve has been adjusted so that a large amount of the EGR gas passes through the EGR cooler, a situation described below may occur.

A larger amount of exhaust gas at a relatively high temperature, which needs to be cooled by the EGR cooler, is introduced into the cylinders through the bypass passage and the like. Accordingly, a cylinder temperature is likely to increase. Although the exhaust gas temperature is temporarily decreased due to the temporal decrease in the engine load caused by the shift operation, there is a time lag between the decrease in the engine load and the decrease in the temperature of the exhaust gas in the exhaust system. Accordingly, when the engine load is temporarily decreased, the cylinder temperature is likely to increase for a certain time. When a combustion speed is low, a carbon component of fuel combusted in the cylinders is discharged as carbon dioxide. When the combustion speed is high, the carbon component is likely to be discharged as soot. Accordingly, if the engine load is increased again after the cylinder temperature has been likely to increase, the combustion speed, at which the fuel is combusted, is likely to increase, and the soot is likely to be generated.

However, in the exhaust gas recirculation apparatus according to the above-described aspect, if it is determined that the transmission is performing the shift operation, the opening degree of the bypass valve is maintained at an opening degree set immediately before it is determined that the transmission is performing the shift operation. Therefore, it is possible to reduce the possibility that the opening degree of the bypass valve is adjusted to increase the amount of the EGR gas passing through the bypass passage due to the temporal decrease in the engine load caused by the shift operation after the opening degree of the bypass valve has been adjusted so that a large amount of the EGR gas passes through the EGR cooler. Accordingly, it is possible to reduce the possibility that the exhaust gas at a relatively high temperature is introduced into the cylinders. Thus, it is possible to suppress the generation of the soot.

In the exhaust gas recirculation apparatus according to the above-described aspect, the exhaust gas recirculation passage may further include an exhaust gas recirculation valve that adjusts an amount of the exhaust gas introduced from the exhaust system to the intake system, and exhaust gas recirculation valve control means for setting an opening degree of the exhaust gas recirculation valve according to an engine operating state; and while the opening degree maintenance means is maintaining the opening degree of the bypass valve, the exhaust gas recirculation valve control means may control the opening degree of the exhaust gas recirculation valve to a value smaller than the opening degree set according to the engine operating state.

As described above, if it is determined that the transmission is performing the shift operation, the opening degree of the bypass valve is maintained at an opening degree set immediately before it is determined that the transmission is performing the shift operation. Therefore, it is possible to reduce the possibility that the exhaust gas at a relatively high temperature is introduced into the cylinders. Accordingly, it is possible to suppress the generation of the soot.

Even if the opening degree of the bypass valve is maintained so that the amount of the EGR gas passing through the EGR cooler is maintained at a large amount, in other words, even if the amount of the EGR gas passing through the bypass passage is maintained at a small amount, the exhaust gas at a high temperature is introduced into the cylinders through the bypass passage. Therefore, the soot may be generated. Also, even if the opening degree of the bypass valve is maintained to close the bypass passage, the residual EGR gas in a portion of the bypass passage, which is located downstream of the bypass valve, is introduced into the cylinders. Therefore, the soot may be generated also in this case.

Thus, in the above-described configuration, the opening degree of the EGR valve is controlled to a value smaller than the opening degree set according to the engine operating state, while the opening degree of the bypass valve is being maintained. Therefore, it is possible to reduce the amount of the EGR gas introduced into the cylinders. Accordingly, it is possible to reliably suppress the generation of the soot. In the configuration, when the opening degree of the EGR valve is controlled to be decreased, it is preferable to decrease the opening degree of the EGR valve to, for example, an opening degree at which the bed temperature of a catalyst provided in the exhaust system of the diesel engine is not decreased.

In the exhaust gas recirculation apparatus according to the above-described aspect, while the opening degree maintenance means is maintaining the opening degree of the bypass valve, the exhaust gas recirculation valve control means may control the opening degree of the exhaust gas recirculation valve to a predetermined value that is smaller than an opening degree corresponding to a fully-opened state by a predetermined decrease amount, and that is larger than an opening degree corresponding to a fully-closed state. The predetermined decrease amount may be variably set based on a temperature of the exhaust gas.

Another aspect of the invention relates to a method of controlling an exhaust gas recirculation apparatus applied to an internal combustion engine connected to a transmission. When the transmission is placed in a neutral state while the transmission is performing a shift operation, an engine load is temporarily decreased. The exhaust gas recirculation apparatus includes an exhaust gas recirculation passage through which part of exhaust gas is introduced from an exhaust system to an intake system, a cooler which is provided in the exhaust gas recirculation passage, and which cools the exhaust gas, a bypass passage through which the exhaust gas is introduced from the exhaust system to the intake system without passing through the cooler, and a bypass valve provided in the bypass passage. An amount of the exhaust gas flowing through the cooler and an amount of the exhaust gas flowing through the bypass passage are adjusted by changing an opening degree of the bypass valve. The method includes setting the opening degree of the bypass valve based on the engine load; determining whether the transmission is performing the shift operation; and if it is determined that the transmission is performing the shift operation, maintaining the opening degree of the bypass valve at an opening degree set immediately before it is determined that the transmission is performing the shift operation.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elemnts, and wherein:
FIG. 1 is a schematic diagram showing a configuration of a diesel engine to which a first embodiment of the invention is applied;
FIG. 2 is a flowchart showing steps of an opening degree maintenance control according to the first embodiment;
FIG. 3 is the flowchart showing steps of the opening degree maintenance control according to the first embodiment;
FIG. 4 is a conceptual diagram showing a relation between an engine rotational speed and an engine load, and a manner in which EGR gas is controlled according to the first embodiment;
FIG. 5 is a flowchart showing steps of an EGR valve control according to the first embodiment;
FIG. 6 is a timing chart showing changes in a situation when the opening degree maintenance control according to the first embodiment is executed; and
FIG. 7 is a flowchart showing a portion of steps of an opening degree maintenance control according to a second embodiment of the invention.

### DETAILED DESCRIPTION OF EMBODIMENTS

### [First embodiment]

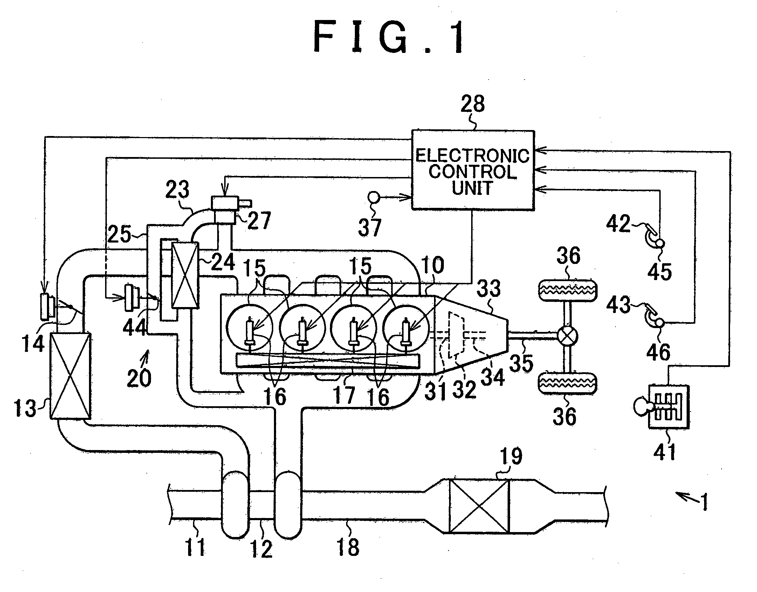

Hereinafter, an exhaust gas recirculation apparatus according to a first embodiment of the invention, which is provided in a vehicle in which a manual transmission is provided, will be described in detail with reference to FIG. 1 to FIG. 6.

FIG. 1 shows a configuration of a diesel engine to which the exhaust gas recirculation apparatus according to the first embodiment is applied. As shown in FIG. 1, a diesel engine 10 (hereinafter, simply referred to as "engine") that includes a plurality of cylinders (four cylinders in the embodiment) is provided in a vehicle 1. An output shaft 31 of the engine 10 is connected to drive wheels 36 via a clutch mechanism 32, a transmission 33 that is a manual transmission, and an axle 35. The clutch mechanism 32 connects the output shaft 31 of the engine 10 to an input shaft 34 of the transmission 33, and disconnects the output shaft 31 of the engine 10 from the input shaft 34 of the transmission 33. The operating state of the clutch mechanism 32 will be described in detail. When a clutch pedal 43 is not operated, the clutch mechanism 32 is in a connection state in which the clutch mechanism 32 connects the output shaft 31 of the engine 10 to the input shaft 34 of the transmission 33. When the clutch pedal 43 is depressed, the clutch mechanism 32 is placed in a disconnection state in which the clutch mechanism 32 disconnects the output shaft 31 of the engine 10 from the input shaft 34 of the transmission 33.

In an intake passage 11 of the engine 10, a compressor chamber of a turbocharger 12, an intercooler 13, and a throttle valve 14 are provided in the stated order in a direction from an upstream side to a downstream side. The compressor chamber of the turbocharger 12 compresses intake air using force of flowing exhaust gas. The intercooler 13 cools the intake air whose temperature has been increased due to compression caused by the turbocharger 12. By adjusting the opening degree of the throttle valve 14, the flow rate of the intake air is adjusted.

The intake passage 11 is divided into intake sub-passages for the respective cylinders of the engine 10, at a position downstream of the throttle valve 14. The intake sub-passages are connected to combustion chambers 15 of the respective cylinders. Injectors 16 are disposed in the combustion chambers 15 of the cylinders. The injectors 16 inject high-pressure fuel stored in a common rail 17 into the combustion chambers 15.

Exhaust sub-passages of an exhaust passage 18 of the engine 10 are connected to the respective cylinders, and are combined into one exhaust passage. A portion of the exhaust passage 18, which is located downstream of a position at which the exhaust sub-passages are combined, is connected to an exhaust turbine of the turbocharger 12. In the exhaust passage 18, a catalytic converter 19 is provided downstream of the exhaust turbine of the turbocharger 12. A catalyst, which purifies exhaust gas, is carried by the catalytic converter 19.

The engine 10 is provided with an exhaust gas recirculation apparatus 20 (hereinafter, referred to as "EGR apparatus"). The EGR apparatus 20 recirculates part of the exhaust gas (hereinafter, the part of the exhaust gas will be referred to as "EGR gas") from the exhaust passage 18, which is in an exhaust system, to the intake passage 11, which is in an intake system. The EGR apparatus 20 includes an exhaust gas recirculation passage (hereinafter, referred to as "EGR passage") 23 through which the EGR gas is introduced from the exhaust passage 18 to the intake passage 11. In the EGR passage 23, an EGR cooler 24 is provided. The EGR cooler 24 cools the EGR gas. The EGR apparatus 20 also includes a bypass passage 25 through which the EGR gas is introduced from the exhaust passage 18 to the intake passage 11 without passing through the EGR cooler 24. More specifically, the bypass passage 25 is provided so that the EGR gas flows from a portion of the EGR passage 23, which is located upstream of the EGR cooler 24 in a direction in which the EGR gas flows, to a portion of the EGR passage 23, which is located downstream of the EGR cooler 24 in the direction in which the EGR gas flows. A bypass valve 44, whose opening degree is adjustable, is provided in the bypass passage 25. An EGR valve 27 is provided in the EGR passage 23 at a position downstream of a position at which the EGR passage 23 is connected to the bypass passage 25. The EGR valve 27 adjusts the amount of the EGR gas introduced into the intake passage 11. A portion of the EGR passage 23, which is located downstream of the EGR valve 27, is connected to a portion of the intake passage 11, which is located downstream of the throttle valve 14.

The engine 10 is controlled by an electronic control unit 28. The electronic control unit 28 includes a Center Processing Unit (CPU), a Read-Only Memory (ROM), a Random Access Memory (RAM), and input/output ports (I/O). The CPU performs computations relating to engine controls. In the ROM, programs and data used for the engine controls are stored. In the RAM, for example, results of the computations are temporarily stored. Signals from the outside are input to the electronic control unit 28 and signals are output from the electronic control unit 28 to the outside through the input/output ports.

The input ports of the electronic control unit 28 are connected to a shift position sensor, an accelerator sensor 45, and a vehicle speed sensor 37. The shift position sensor detects a shift position "eshift" that is a position at which a shift lever 41 is located. The accelerator sensor 45 detects the depression amount of an accelerator pedal 42 depressed by a driver of the vehicle 1. The vehicle speed sensor 37 detects a vehicle speed SP of the vehicle 1 based on, for example, the rotation of the output shaft of the transmission 33. Further, the input ports of the electronic control unit 28 are connected to sensors that detect an engine operating state, such as a clutch switch 46, an airflow meter, and a crank angle sensor. The clutch switch 46 detects the depression of the clutch pedal 43. The airflow meter detects the amount of intake air. The crank angle sensor detects the rotational angle (i.e., the crank angle) of the output shaft 31 of the engine 10.

Output ports of the electronic control unit 28 are connected to drive circuits for, for example, the throttle valve 14, the injectors 16, the bypass valve 44, and the EGR valve 27. The electronic control unit 28 executes the engine controls such as an intake air reduction control and a fuel injection control, by outputting command signals to the drive circuits according to the engine operating state determined based on information from the sensors.

In the embodiment, the electronic control unit 28 executes a bypass valve opening degree control and an EGR valve control included in the engine controls. The electronic control unit 28 executes the bypass valve opening degree control to control the opening degree of the bypass valve 44 based on an engine load. The electronic control unit 28 executes the EGR valve control to control the opening degree of the EGR valve 27.

By executing the bypass valve opening degree control, the electronic control unit 28 controls the amount of the EGR gas passing through the EGR cooler 24, and the amount of the EGR gas passing through the bypass passage 25 in the total amount of the EGR gas, in the EGR apparatus 20. Thus, the temperature of the catalytic converter 19 provided in the exhaust passage 18 is maintained at an appropriate high temperature. More specifically, when the engine load is low and an exhaust gas temperature is low, the bypass valve 44 is controlled to be fully opened to increase the amount of the EGR gas passing through the bypass passage 25, thereby suppressing a decrease in the exhaust gas temperature. When the engine load is high and the exhaust gas temperature is high, the bypass valve 44 is controlled to be fully closed to increase the amount of the EGR gas passing through the EGR cooler 24, thereby suppressing an excessive increase in the exhaust gas temperature.

By executing the EGR valve control, the electronic control unit 28 adjusts the amount of the EGR gas flowing into the intake passage 11 through the EGR cooler 24 or the bypass passage 25. The EGR valve control and the bypass valve opening degree control will be described in detail later.

In the vehicle 1 in which the manual transmission 33 is provided, when the transmission 33 is performing a shift operation, the transmission is temporarily placed in a neutral state (i.e., a state in which transmission of drive power from the output shaft 31 of the engine 10 to the output shaft 35 of the transmission 33 is interrupted). At this time, the accelerator pedal 42 is released to suppress an increase in an engine rotational speed. That is, an engine output is temporarily decreased. In this case, because the engine load is decreased, the opening degree of the bypass valve 44 is changed according to the decrease in the engine load.

When the transmission 33 is performing the shift operation, the engine load is temporarily decreased. After completion of the shift operation of the transmission 33, the engine load is increased to a value corresponding to a speed ratio achieved after the gear shift. If the opening degree of the bypass valve 44 is changed each time the transmission 33 performs the shift operation, the bypass valve may be unnecessarily operated. Therefore, for example, durability of the bypass valve 44 may be decreased.

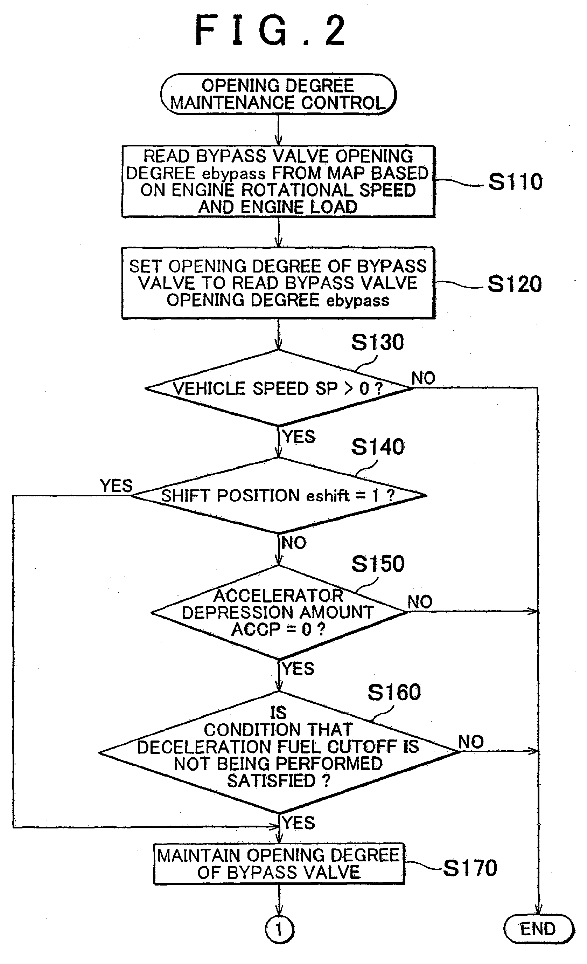

Accordingly, in the embodiment, an opening degree maintenance control for the EGR apparatus 20 is executed to reduce the possibility that the bypass valve 44 is unnecessarily operated when the transmission 33 is performing the shift operation. The opening degree maintenance control maintains the opening degree of the bypass valve 44 when the transmission 33 is performing the shift operation. Hereinafter, the opening degree maintenance control, the EGR valve control, and the bypass valve opening degree control will be described with reference to FIG. 2 to FIG. 6.

First, a method of determining whether the transmission 33 is performing the shift operation will be described. When the transmission 33 is performing the shift operation, the transmission 33 is placed in the neutral state. When the transmission 33 is in the neutral state, the engine load is decreased to suppress an increase in the engine rotational speed. Accordingly, when a condition that the transmission 33 is in the neutral state is satisfied, it may be determined that the transmission 33 is performing the shift operation. However, when the transmission 33 is the manual transmission, the transmission 33 may be placed in the neutral state while the vehicle is in a stopped state. Therefore, it is not possible to determine whether the transmission 33 is performing the shift operation using only the condition that "the transmission is in the neutral state". The transmission 33 performs the shift operation when the vehicle is traveling. Therefore, by adding a condition that a vehicle speed is equal to or higher than a predetermined speed, it is possible to avoid an erroneous determination that the transmission 33 is performing the shift operation when the transmission 33 is in the neutral state while the vehicle is in the stopped state. Thus, a first condition is used to determine that the transmission 33 is performing the shift operation. The first condition is that the transmission 33 is in the neutral condition, and the vehicle speed is equal to or higher than the predetermined speed, that is, the vehicle is traveling. That is, when the above-described first condition is satisfied, it is determined that the transmission 33 is performing the shift operation.

When the transmission 33 is to be placed in the neutral state during the gear shift, first, the driver releases the accelerator pedal 42, and thus, the depression amount of the accelerator pedal 42 is equal to or smaller than a predetermined amount. The depression amount of the accelerator pedal 42 may be equal to or smaller than the predetermined amount, for example, when the vehicle is in the stopped state and the engine 10 is idling. In contrast, the transmission 33 performs the shift operation when the vehicle is traveling, as described above. Therefore, by adding the condition that the vehicle speed is equal to or higher than the predetermined speed, it is possible to avoid an erroneous determination that the transmission 33 is performing the shift operation when the engine 10 is idling. However, when deceleration fuel cutoff is being performed, the condition that the depression amount of the accelerator pedal 42 is equal to or smaller than the predetermined amount and the vehicle speed is equal to or higher than the predetermined speed is satisfied. Therefore, it is necessary to determine whether the condition is satisfied due to the deceleration fuel cutoff. Thus, a second condition is also used to determine that the transmission 33 is performing the shift operation. The second condition is a condition that the depression amount of the accelerator pedal 42 is equal to or smaller than the predetermined amount, the vehicle speed is equal to or higher than the predetermined speed, and the deceleration fuel cutoff is not being performed.

FIG. 2 shows steps of the opening degree maintenance control that may be regarded as the opening degree maintenance means employed in the embodiment. Processes in the control are repeatedly executed by the electronic control unit 28 during the operation of the engine 10.

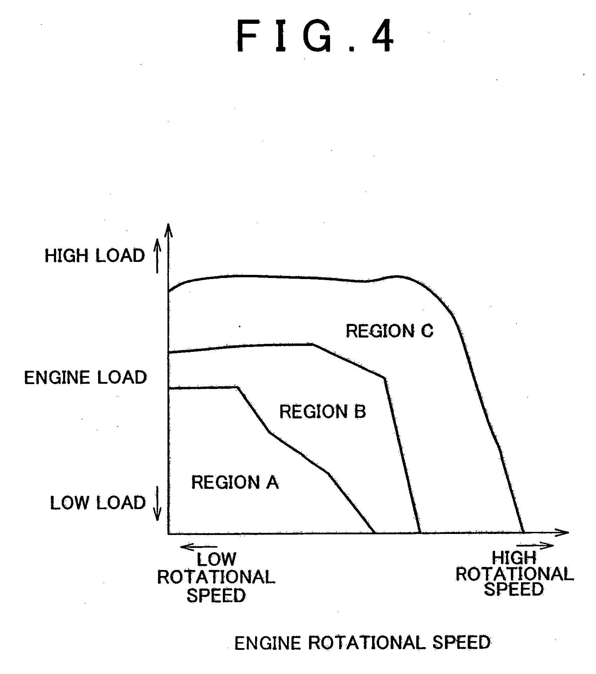

When the control is started, first, a bypass valve opening degree "ebypass" is read from a map based on the engine rotational speed and the engine load (step S110). A value detected by the crank angle sensor is used as the engine rotational speed. A fuel injection amount set based on the operation amount of the accelerator pedal 42 is used as a parameter for the engine load. Based on the engine rotational speed and the engine load, the bypass valve opening degree "ebypass" is read from the map shown in FIG. 4. More specifically, for example, when a value of the engine rotational speed and a value of the engine load are in a region A in the map shown in FIG. 4, the bypass valve opening degree "ebypass" corresponding to the fully-opened state is read. When the value of the engine rotational speed and the value of the engine load are in a region B, the bypass valve opening degree "ebypass" corresponding to the fully-closed state is read. When the value of the engine rotational speed and the value of the engine load are in a region C, the EGR valve 27 is controlled to be fully closed. Thus, the bypass valve opening degree "ebypass" is maintained at, for example, a previous opening degree.

After the bypass valve opening degree "ebypass" is read from the map, the opening degree of the bypass valve 44 is set to the bypass valve opening degree "ebypass" (step 120). The processes in step S110 and step S120 may be regarded as the bypass valve opening degree control.

Next, it is determined whether a vehicle speed SP is higher than "0" (step S 130). By determining whether this condition is satisfied, it is determined whether the vehicle 1 is not in the stopped state. If it is determined that the vehicle speed SP is "0" (NO in step S130), it is determined that the vehicle 1 is in the stopped state, and the routine ends.

If it is determined that the vehicle speed SP is higher than "0" (YES in step S 130), it is determined that the vehicle 1 is traveling, and a process in the next step S 140 is performed. In step S140, it is determined whether the shift position "eshift" is "1". The shift position "eshift" will be described. When the shift lever 41 is at a neutral position, the shift position "eshift" is "1". When the shift lever 41 is not at the neutral position, the shift position "eshift" is "0". The shift position "eshift" is detected by the shift position sensor.

If the shift position "eshift" is "1" (YES in step S140), the first condition is satisfied. Therefore, the opening degree of the bypass valve 44 is maintained (step S 170). More specifically, the opening degree of the bypass valve 44 is maintained at the opening degree "ebypass" set in the processes in step S110 and step S120 that may be regarded as the bypass valve opening degree control. Thus, the opening degree of the bypass valve 44 is maintained at the opening degree set immediately before it is determined that the transmission 33 is performing the shift operation. Then, the routine ends.

If the shift position "eshift" is "0" (NO in step S140), it is determined whether an accelerator depression amount ACCP is "0" (step S150). By determining whether this condition is satisfied, it is determined whether the driver of the vehicle 1 has released the accelerator pedal 42 to shift the gear. As the accelerator depression amount ACCP, a value detected by the accelerator sensor 45 is used. If it is determined that the accelerator depression amount ACCP is not "0" (NO in step S 150), the routine ends.

If it is determined that the accelerator depression amount ACCP is "0" (YES in step S150), it is determined that the driver of the vehicle 1 is shifting the gear, and then, it is determined whether the condition that the deceleration fuel cutoff is not being performed is satisfied (step S160). If it is determined that the deceleration fuel cutoff is being performed (NO in step S160), the routine ends.

If it is determined that the deceleration fuel cutoff is not being performed (YES in step S160), the second condition is satisfied, because an affirmative determination is made in step S130, an affirmative determination is made in step S150, and an affirmative determination is made in step S160. Accordingly, the opening degree of the bypass valve 44 is maintained (step S170).

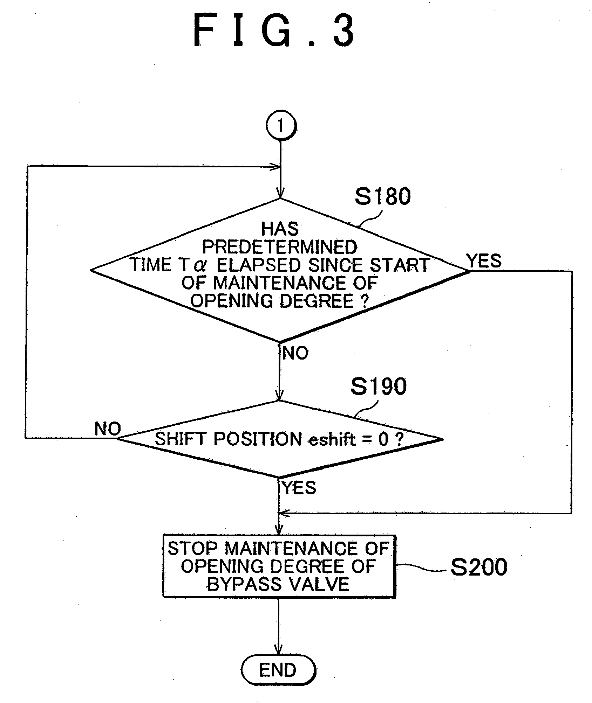

Thus, if one of the first condition and the second condition is satisfied, the opening degree of the bypass valve 44 is maintained in step S 170. Further, in the opening degree maintenance control, it is determined that the maintenance of the opening degree of the bypass valve 44 should be stopped after a certain time elapses. Next, the control that stops the maintenance of the opening degree will be described in detail with reference to FIG. 3.

After the opening degree of the bypass valve 44 is maintained in step S 170 in FIG. 2, it is determined whether a predetermined time Tα, has elapsed since start of maintenance of the opening degree of the bypass valve 44 (step S 180).

In the case of the manual transmission, it may take time to perform the shift operation, depending on driver's driving skill level. Thus, the depression amount of the accelerator pedal 42 may remain equal to or smaller than the predetermined amount for a relatively long time, or the transmission 33 may remain in the neutral state for a relatively long time. In this case, the opening degree of the bypass valve 44 is maintained for a relatively long time. The opening degree of the bypass valve 44 is maintained by the opening degree maintenance control to reduce the possibility that the bypass valve 44 is unnecessarily operated due to the temporal decrease in the engine load when the transmission 33 is performing the shift operation. Therefore, it is not preferable that the opening degree of the bypass valve 44 be maintained for a relatively long time. That is, if the engine load remains decreased for a relatively long time, it is preferable to set the opening degree of the bypass valve 44 according to the decreased engine load.

Thus, in the embodiment, a process in step S 180 is performed to reduce the possibility that the opening degree of the bypass valve 44 is maintained for a relatively long time. In step S 180, it is determined whether the predetermined time Tα has elapsed since the start of the maintenance of the opening degree of the bypass valve 44. For example, it is determined to be effective to stop the maintenance of the opening degree of the bypass valve 44, and to change the opening degree of the bypass valve 44 based on the engine load when the opening degree of the bypass valve 44 has been maintained for the predetermined time Tα by the opening degree maintenance control. The predetermined time Tα is empirically set in advance.

If it is determined that the predetermined time Tα has elapsed since the start of the maintenance of the opening degree of the bypass valve 44 (YES in step S 180), it is determined to be effective to change the opening degree of the bypass valve 44 based on the engine load, and the maintenance of the opening degree of the bypass valve 44 is forcibly stopped (step S200).

If it is determined that the predetermined time Tα has not elapsed since the start of the maintenance of the opening degree of the bypass valve 44 (NO in step S 180), it is determined whether the shift position "eshift" is "0" (step S 190).

If it is determined that the shift position "eshift" is "0" (YES in step S190), it is determined that the state of the transmission 33 has been changed from the neutral state to the non-neutral state. Thus, the maintenance of the opening degree of the bypass valve 44 is stopped (step S200).

If it is determined that the shift position "eshift" is "1" (NO in step S190), it is determined that the transmission 33 remains in the neutral state after the start of the maintenance of the opening degree of the bypass valve 44. Thus, the opening degree of the bypass valve 44 continues to be maintained. Thus, until an affirmative determination is made in step S 180 or step S 190, the opening degree of the bypass valve 44 continues to be maintained.

Thus, if the maintenance of the opening degree of the bypass valve 44 is stopped when an affirmative determination is made in step S 180 or step S190. After the maintenance of the opening degree of the bypass valve 44 is stopped, the opening degree of the bypass valve 44 is adjusted based on the above-described map shown in FIG. 4 again.

In the diesel engine, if the opening degree of the bypass valve 44 is adjusted to increase the amount of the EGR gas passing through the bypass passage 25 due to the temporal decrease in the engine load caused by the shift operation, after the opening degree of the bypass valve 44 has been adjusted so that a large amount of the EGR gas passes through the EGR cooler 24, a situation described below may occur.

A larger amount of exhaust gas at a relatively high temperature, which needs to be cooled by the EGR cooler 24, is introduced into the cylinders through the bypass passage 25 and the like. Accordingly, a cylinder temperature is likely to increase. Although the exhaust gas temperature is temporarily decreased due to the temporal decrease in the engine load caused by the shift operation, there is a time lag between the decrease in the engine load and the decrease in the temperature of the exhaust gas in the exhaust system. Accordingly, when the engine load is temporarily decreased, the cylinder temperature is likely to increase for a certain time. When a combustion speed is low, a carbon component of fuel combusted in the cylinders is discharged as carbon dioxide. When the combustion speed is high, the carbon component is likely to be discharged as soot. Accordingly, if the engine load is increased again after the cylinder temperature has been likely to increase, the combustion speed, at which the fuel is combusted, is likely to increase, and the soot is likely to be generated.

However, in the embodiment, if it is determined that the transmission 33 is performing the shift operation, the opening degree of the bypass valve 44 is maintained at an opening degree set immediately before it is determined that the transmission 33 is performing the shift operation. Therefore, it is possible to reduce the possibility that the opening degree of the bypass valve 44 is adjusted to increase the amount of the EGR gas passing through the bypass passage 25 due to the temporal decrease in the engine load caused by the shift operation after the opening degree of the bypass valve 44 has been adjusted so that a large amount of the EGR gas passes through the EGR cooler 24. Also, it is possible to reduce the possibility that the exhaust gas at a relatively high temperature is introduced into the cylinders. Accordingly, it is possible to suppress the generation of the soot.

Even if the opening degree of the bypass valve 44 is maintained so that the amount of the EGR gas passing through the EGR cooler 24 is maintained at a large amount, in other words, even if the amount of the EGR gas passing through the bypass passage 25 is maintained at a small amount, a certain amount of the exhaust gas at a high temperature is introduced into the cylinders through the bypass passage 25. Therefore, the soot may be generated. Also, even if the bypass valve 44 is controlled to be fully closed or fully opened as in the embodiment, the soot may be generated. That is, even if the opening degree of the bypass valve 44 is maintained at the opening degree corresponding to the fully-closed state to close the bypass passage 25, the residual EGR gas in a portion of the bypass passage 25, which is located downstream of the bypass valve 44, is introduced into the cylinders. Therefore, the soot may be generated also in this case.

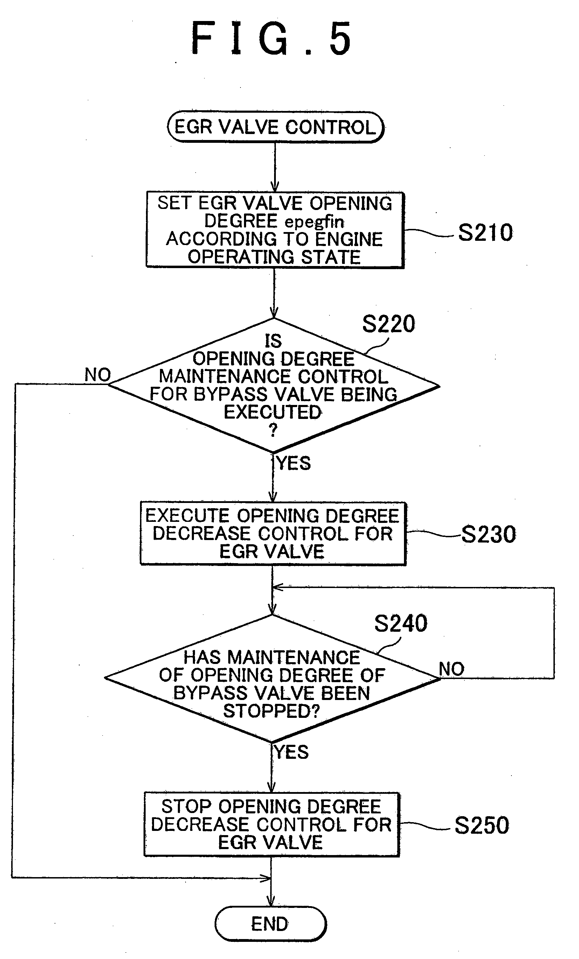

Accordingly, in the embodiment, the EGR valve control, which may be regarded as the exhaust gas recirculation valve control means, is executed to suppress the generation of the soot. The EGR valve control will be described with reference to FIG. 5. The control is repeatedly executed by the electronic control unit 28 during the operation of the engine 10, as well as the opening degree maintenance control.

As shown in FIG. 5, in the EGR valve control, first, an EGR valve opening degree "epegfin", which is the opening degree of the EGR valve 27, is set according to the engine operating state (step S210). When the engine operating state is in one of the region A and the region B in the map shown in FIG. 4, the opening degree of the EGR valve 27 is set to an opening degree corresponding to the fully-opened state. When the engine operating state is in the region C, the opening degree of the EGR valve 27 is set to an opening degree corresponding to the fully-closed state.

Then, it is determined whether the opening degree of the bypass valve 44 is being maintained (step S220). If it is determined that the opening degree of the bypass valve 44 is not being maintained (NO in step S220), the routine ends.

If it is determined that the opening degree of the bypass valve 44 is being maintained (YES in step S220), a control that decreases the opening degree of the EGR valve 27 (hereinafter, the control will be referred to as "opening degree decrease control") is executed (step S230). More specifically, in the opening degree decrease control, the opening degree of the EGR valve 27 is controlled to an opening degree "epegfinα" so that the opening degree of the EGR valve 27 is smaller than the opening degree set according to the engine operating state in step S210. In the embodiment, the opening degree "epegfinα," is smaller than the opening degree corresponding to the fully-opened state of the EGR valve 27 by a decrease amount Δepegfin. Thus, the opening degree "epegfinα" is set to be slightly larger than the opening amount corresponding to the fully-closed state. The opening degree "epegfinα" is empirically set in advance so that the bed temperature of the catalytic converter 19 is not decreased at the opening degree "epegfinα". If the engine operating state is in the region C in the map shown in FIG. 4, and the opening degree of the EGR valve 27 is the opening degree corresponding to the fully-closed state, the opening degree of the EGR valve 27 is maintained at the opening degree corresponding to the fully-closed state. The decrease amount Δepegfin may be variably set based on the exhaust gas temperature. In the case where the opening degree of the EGR valve 27 is variably set to an opening degree in a range from the opening degree corresponding to the fully-closed state to the opening degree corresponding to the fully-opened state, according to the engine operating state, the opening degree of the EGR valve 27 may be controlled to a value smaller than the opening degree set based on the engine operating state.

Then, in the next step S240, the opening degree decrease control that decreases the opening degree of the EGR valve 27, that is, the control that decreases the opening degree of the EGR valve 27 to the opening degree "epegfinα" continues to be executed as long as it is determined that the maintenance of the opening degree of the bypass valve 44 has not been stopped (NO in step S240). That is, the opening degree decrease control is repeatedly executed until it is determined that the maintenance of the opening degree of the bypass valve 44 has been stopped. If it is determined that the maintenance of the opening degree of the bypass valve 44 has been stopped (YES in step S240), the opening degree decrease control that decreases the opening degree of the EGR valve 24 ends (step S250). Thus, the opening degree of the EGR valve 27 is adjusted based on the map shown in FIG. 4, again.

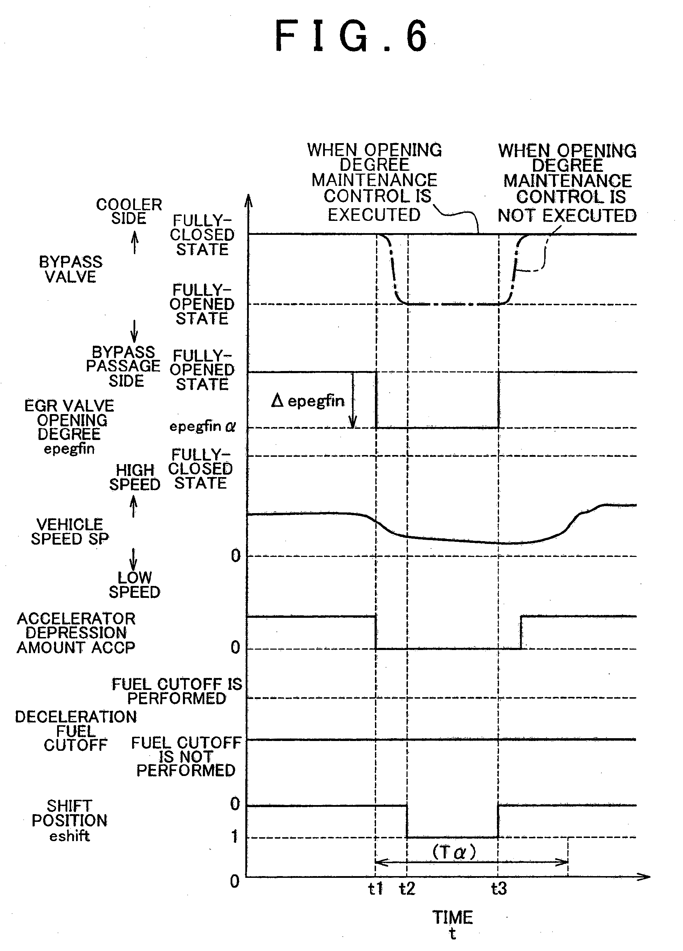

Changes in the situation when the opening degree maintenance control and the EGR valve control are executed according to the embodiment will be described with reference to FIG. 6. FIG. 6 shows the case in which when the engine operating state is in the region B in FIG. 4, that is, when the opening degree of the bypass valve 44 is controlled to the opening degree corresponding to the fully-closed state, and the opening degree of the EGR valve 27 is controlled to the opening degree corresponding to the fully-opened state, the opening degree maintenance control and the EGR valve control are executed.

As shown in FIG. 6, when the transmission 33 performs the shift operation, first, the driver of the vehicle 1 releases the accelerator pedal 42, and thus, the accelerator depression amount ACCP is decreased to "0" (at a timing t1). At this time, if the opening degree maintenance control is not executed, the bypass valve 44 is fully opened due to the decrease in the engine load as shown by a chain line in FIG. 6. In contrast, in the embodiment, at the timing t1, it is determined that the vehicle speed SP is higher than "0", and the deceleration fuel cutoff is not being performed, and therefore, the opening degree of the bypass valve 44 is maintained, and thus, the opening degree of the bypass valve 44 is maintained at the opening degree corresponding to the fully-closed state. Then, the driver of the vehicle 1 operates the shift lever 41, and thus, the shift position "eshift" is changed from "0" indicating that the transmission 33 is in a given gear, to "1" indicating that the transmission 33 is in the neutral state (at a timing t2). Thus, as shown in FIG. 6, when the condition that the accelerator depression amount ACCP is "0", the vehicle speed SP is higher than "0", and the deceleration fuel cutoff is not being performed is satisfied, the opening degree of the bypass valve 44 starts to be maintained before the shift position "eshift" is changed to "1" indicating that the transmission 33 is in the neutral state.

When the opening degree of the bypass valve 44 is being maintained, the opening degree decrease control that decreases the opening degree of the EGR valve 27 is executed. Thus, the opening degree of the EGR valve 27 is set to the opening degree "epegfinα" that is smaller than the opening degree corresponding to the fully-opened state by the decrease amount Δepegfin.

When the driver of the vehicle 1 finishes the operation of the shift lever 41, and thus, the shift position "eshift" is changed from "1" to "0" (at a timing t3) while the opening degree of the bypass valve 44 is being maintained, the maintenance of the opening degree of the bypass valve 44 is stopped. In addition, when the maintenance of the opening degree of the bypass valve 44 is stopped, the opening degree decrease control that decreases the opening degree of the EGR valve 27 ends.

Although not shown in FIG. 6, the opening degree of the bypass valve 44 may be maintained upon the satisfaction of the condition that the vehicle speed SP is higher than "0" and the shift position "eshift" is changed from "0" to "1", instead of the condition that the accelerator depression amount ACCP is "0", the vehicle speed SP is higher than "0", and the deceleration fuel cutoff is not being performed. In this case, the opening degree of the bypass valve 44 starts to be maintained at the timing t2 in FIG. 6, at which the shift position "eshift" is changed from "0" to "1".

The maintenance of the opening degree of the bypass valve 44 may be stopped due to the satisfaction of the condition that the predetermined time Tα has elapsed since the start of the maintenance of the opening degree of the bypass valve 44, instead of the condition that the shift position "eshift" is changed from "1" to "0". In this case, if the predetermined time Tα elapses at a timing in a period from the timing t1 at which the opening degree of the bypass valve 44 starts to be maintained, to the timing t3 at which the change of the shift position "eshift" from "1" to "0" is completed in FIG. 6, the maintenance of the opening degree of the bypass valve 44 is stopped at the timing at which the predetermined time Tα elapses.

According to the embodiment that has been described, it is possible to obtain the following advantageous effects. (1) When the engine load is temporarily decreased due to the shift operation of the transmission 33, the opening degree of the bypass valve 44 is maintained at an opening degree set immediately before the transmission 33 performs the shift operation. Accordingly, it is possible to reduce the possibility that the opening degree of the bypass valve 44 is changed each time the transmission 33 performs the shift operation. Thus, it is possible to reduce the possibility that the bypass valve 44 is unnecessarily operated due to the shift operation.

(2) When the first condition is satisfied, it is determined that the transmission 33 is performing the shift operation. The first condition is the condition that the transmission 33 is in the neutral state, and the vehicle speed SP is higher than "0", that is, the vehicle 1 is traveling. Thus, the opening degree maintenance control maintains the opening degree of the bypass valve 44, in accordance with the temporal decrease in the engine load.

(3) The second condition is used to determine that the manual transmission 33 is performing the shift operation. The second condition is the condition that the accelerator depression amount ACCP is "0", the vehicle speed SP is higher than "0", and the deceleration fuel cutoff is not being performed. That is, when the second condition is satisfied, it is determined that the transmission 33 is performing the shift operation. Thus, the opening degree maintenance control maintains the opening degree of the bypass valve in accordance with the temporal decrease in the engine load.

(4) When the manual transmission performs the shift operation, the transmission is placed in the neutral state after the depression amount of the accelerator pedal 42 depressed by the driver is decreased to an amount equal to or smaller than the predetermined amount. Therefore, if the opening degree maintenance control starts to maintain the opening degree of the bypass valve 44 after it is detected that the transmission 33 is in the neutral state, the timing, at which the opening degree of the bypass valve 44 starts to be maintained, may lag behind the decrease in the engine load.

However, in the embodiment, the opening degree of the bypass valve 44 starts to be maintained at the timing at which the decrease in the depression amount of the accelerator pedal 42 is detected. The depression amount of the accelerator pedal 42 is always decreased before the transmission 33 is placed in the neutral state. Thus, it is possible to appropriately reduce the time lag between the timing at which the engine load is decreased and the timing at which the opening degree of the bypass valve 44 starts to be maintained.

(5) There is a limit on the time during which the opening degree of the bypass valve 44 is maintained. Therefore, the opening degree of the bypass valve 44 is appropriately maintained, regardless of the driver's driving skill level, for example, regardless of the variation in the time required for the driver to perform a shift operation.

(6) The maintenance of the opening degree of the bypass valve 44 is stopped when the transmission 33, which has been temporarily in the neutral state, is brought to the non-neutral state while the transmission 33 is performing the shift operation, that is, when the state of the transmission 33 starts to change so that the transmission 33 starts to shift toward a target gear, and the engine load, which has been temporarily decreased, starts to increase. Thus, in the embodiment, it is possible to appropriately set the timing at which the maintenance of the opening degree of the bypass valve 44 is stopped.

(7) In the diesel engine, if the opening degree of the bypass valve 44 is adjusted to increase the amount of the EGR gas passing through the bypass passage 25 due to the temporal decrease in the engine load caused by the shift operation, after the opening degree of the bypass valve 44 has been adjusted so that a large amount of the EGR gas passes through the EGR cooler 24, the soot may be particularly likely to be generated. However, in the embodiment, if it is determined that the transmission 33 is performing the shift operation, the opening degree of the bypass valve 44 is maintained at an opening degree set immediately before it is determined that the transmission 33 is performing the shift operation. Therefore, it is possible to reduce the possibility that the opening degree of the bypass valve 44 is adjusted to increase the amount of the EGR gas passing through the bypass passage 25 due to the temporal decrease in the engine load caused by the shift operation after the opening degree of the bypass valve 44 has been adjusted so that a large amount of the EGR gas passes through the EGR cooler 24. Also, it is possible to reduce the possibility that the exhaust gas at a relatively high temperature is introduced into the cylinders. Accordingly, it is possible to suppress the generation of the soot.

(8) The opening degree decrease control, which decreases the opening degree of the EGR valve 27, is executed in accordance with the maintenance of the opening degree of the bypass valve 44. Therefore, it is possible to reduce the amount of the EGR gas introduced into the cylinders. Accordingly, it is possible to reliably suppress the generation of the soot.

### [Second embodiment]

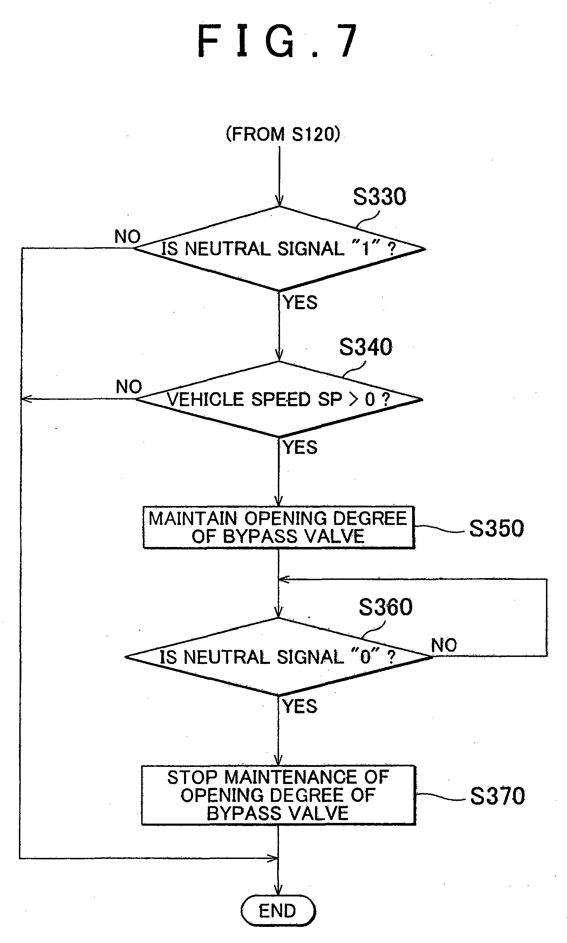

Hereinafter, an exhaust gas recirculation apparatus according to a second embodiment of the invention will be described in detail with reference to FIG. 7. The configuration of the diesel engine (hereinafter, simply referred to as "engine") 10 in the second embodiment is different from the configuration of the engine 10 shown in FIG. 1 in the first embodiment. A portion of the opening degree maintenance control that maintains the opening degree of the bypass valve in the second embodiment is different from a portion of the opening degree maintenance control shown in FIG. 2 in the first embodiment. Hereinafter, the exhaust gas recirculation apparatus in the second embodiment will be described with focus on the differences between the first and second embodiments. In the second embodiment, the EGR valve control shown in FIG. 5 is executed as in the first embodiment.

In the embodiment, the transmission 33 provided in the engine 10 is an automatic transmission. The transmission 33 automatically shifts according to the traveling state of the vehicle 1. As is known, when the automatic transmission is performing the shift operation, the automatic transmission is temporarily placed in the neutral state. When the automatic transmission is temporarily placed in the neutral state, the engine load is temporarily decreased due to the decrease in the engine load.

FIG. 7 shows steps of the opening degree maintenance control that may be regarded as the opening degree maintenance means in the embodiment. The control is repeatedly executed by the electronic control unit 28 during the operation of the engine 10. In the opening degree maintenance control, first, the bypass valve opening degree "ebypass" is read from the map based on the engine rotational speed and the engine load (step S110), and the opening degree of the bypass valve 44 is set to the bypass valve opening degree "ebypass" that is read (step S120), as in the steps of the control shown in FIG. 2. The manner in which the opening degree of the bypass valve 44 is set is the same as that in the first embodiment.

After the opening degree of the bypass valve 44 is set to the opening degree "ebypass" in step S120, it is determined whether a neutral signal is "1" (step S330) in the opening degree maintenance control in the second embodiment. The neutral signal is "1" when a neutral request is output from a control device that executes a shift control for the automatic transmission. The neutral signal is "0" when the neutral request is not output from the control device. By determining whether the neutral signal is "1", it is determined whether the transmission 33 is in the neutral state. If it is determined that the neutral signal is "0" (NO in step S330), it is determined that the transmission 33 is not in the neutral state. Then, the routine ends.

If it is determined that the neutral signal is "1" (YES in step S330), it is determined that the transmission 33 is in the neutral state. Then, the next process is performed. In the second embodiment, the transmission 33 is placed in the neutral state to reduce fuel consumption even when the vehicle is in the stopped state. Therefore, it is not possible to determine whether the transmission 33 is performing the shift operation using only the condition that "the transmission is in the neutral state". The transmission 33 performs the shift operation when the vehicle is traveling. Therefore, by adding the condition that the vehicle speed is equal to or higher than the predetermined speed, it is possible to avoid an erroneous determination that the transmission 33 is performing the shift operation when the transmission 33 is in the neutral state while the vehicle is in the stopped state.

In the next step S340, it is determined whether the vehicle speed SP is higher than "0". By determining whether this condition is satisfied, it is determined whether the vehicle 1 is not in the stopped state. If it is determined that the vehicle speed SP is "0" (NO in step S340), it is determined that the vehicle 1 is in the stopped state, and the routine ends. If it is determined that the vehicle speed SP is higher than "0" (YES in step S340), it is determined that the vehicle 1 is traveling, and the opening degree of the bypass valve 44 is maintained (step S350).

The conditions used in the determination processes in step S330 and step S340 are the conditions for determining whether the transmission 33 is performing the shift operation. If the conditions are satisfied, the opening degree of the bypass valve 44 is maintained in step S350.

Next, after the opening degree of the bypass valve 44 is maintained in step S350, it is determined whether the neutral signal is "0" (step S360). If it is determined that the neutral signal is "1" (NO in step S360), it is determined that the transmission 33 remains in the neutral state, and the opening degree of the bypass valve 44 continues to be maintained. Thus, the opening degree of the bypass valve 44 continues to be maintained until an affirmative determination is made in step S360.

If it is determined that the neutral signal is "0" (YES in step S360), it is determined that the state of the transmission 33 has been changed from the neutral state to the non-neutral state, and the maintenance of the opening degree of the bypass valve 44 is stopped (step S370). Thus, after the maintenance of the opening degree of the bypass valve 44 is stopped, the opening degree of the bypass valve 44 is adjusted based on the map shown in FIG. 4 again.

According to the second embodiment that has been described, when the transmission 33 is the automatic transmission, it is possible to obtain the advantageous effects (1), (2), and (6) to (8) that are obtained in the first embodiment.

The invention may be realized in the following embodiments made by appropriately modifying the above-described embodiments. In the first embodiment, the condition that the shift lever 41 is at the neutral position is employed as the condition for determining that the transmission 33 is in the neutral state. In a modified embodiment, it may be determined that the transmission 33 is in the neutral state when it is detected that the clutch pedal is depressed.

In the first and second embodiments, the opening degree of the bypass valve 44 is adjusted to be fully opened or fully closed according to the engine operating state. However, the manner, in which the bypass valve 44 is adjusted, is not limited to this manner. The opening degree of the bypass valve 44 may be appropriately changed in a range from the opening degree corresponding to the fully-opened state to the opening degree corresponding to the fully-closed state, according to the engine operating state.

In the first and second embodiments, the opening degree of the EGR valve 27 is adjusted to be fully opened or fully closed according to the engine operating state. However, the manner, in which the EGR valve 27 is adjusted, is not limited to this manner. The opening degree of the EGR valve may be appropriately changed in a range from the opening degree corresponding to the fully-opened state to the opening degree corresponding to the fully-closed state, according to the engine operating state.

In the first and second embodiments, the opening degree of the EGR valve 27 is controlled to the opening degree "epegfinα" regardless of the opening degree of the bypass valve 44. In a modified embodiment, the opening degree "epegfinα" may be set according to the opening degree of the bypass valve 44 each time the opening degree decrease control, which decreases the opening degree of the EGR valve 27, is executed. However, the opening degree "epegfinα" needs to be set to be smaller than the opening degree set according to the engine operating state. Also, it is preferable that the opening degree "epegfinα" should be set so that the bed temperature of the catalytic converter is not decreased at the opening degree "epegfinα". In the modified embodiment as well, it is possible to obtain the advantageous effect (8) obtained in the first and second embodiments.

The EGR valve control shown in FIG. 5 may be omitted. In the second embodiment, when the neutral signal is "1", it is determined that the transmission 33 is in the neutral state. In a modified embodiment, it may be determined whether the automatic transmission is in the neutral state by detecting operating states of valves that are operated to bring the automatic transmission to the neutral state, for example, hydraulic valves.

In the first embodiment, the first condition and the second condition are set as the conditions for determining whether the transmission is performing the shift operation. However, one of the first and second conditions may be set.

In the first embodiment, the process in step S 180 may be omitted. In the first embodiment, the condition that the accelerator depression amount ACCP is "0" is employed as the condition for determining that the accelerator pedal 42 has been released by the driver of the vehicle 1. In a modified embodiment, a predetermined depression amount other than "0" may be set, and a condition that the accelerator depression amount ACCP is equal to or smaller than the predetermined depression amount may be employed as the condition for determining that the accelerator pedal has been released. The predetermined depression amount employed in the condition is a value at which it is determined that the accelerator pedal has been released, and which is set in advance, for example, empirically.

In the first and second embodiments, the condition that the vehicle speed SP is higher than "0" is employed as the condition for determining that the vehicle 1 is traveling. In a modified embodiment, a predetermined speed other than "0" may be set, and a condition that the vehicle speed SP is equal to or higher than the predetermined speed may be employed as the condition for determining that the vehicle is traveling. The predetermined speed of the vehicle speed SP employed in the condition is a value at which it is determined that the vehicle is traveling, and which is set in advance, for example, empirically.

In the first and second embodiments, the invention is applied to the vehicle that includes the diesel engine. However, the invention is not limited to the diesel engine. The invention may be applied to, for example, a gasoline engine, as long as the gasoline engine is an internal combustion engine provided with an exhaust gas recirculation apparatus that includes an EGR cooler and a bypass passage. In the modified embodiments as well, it is possible to obtain at least advantageous effects similar to the advantageous effects (1) to (6) obtained in the first and second embodiments.

## Claims

1. An exhaust gas recirculation apparatus (20) applied to an internal combustion engine (10) connected to a transmission (33), wherein when the transmission is placed in a neutral state while the transmission is performing a shift operation, an engine load is temporarily decreased; the exhaust gas recirculation apparatus includes an exhaust gas recirculation passage (23) through which part of exhaust gas is introduced from an exhaust system (18) to an intake system (11), a cooler (24) which is provided in the exhaust gas recirculation passage, and which cools the exhaust gas, a bypass passage (25) through which the exhaust gas is introduced from the exhaust system to the intake system without passing through the cooler, and a bypass valve (44) provided in the bypass passage; and an amount of the exhaust gas flowing through the cooler and an amount of the exhaust gas flowing through the bypass passage are adjusted by changing an opening degree of the bypass valve based on the engine load, the exhaust gas recirculation apparatus being **characterized by** comprising:
opening degree maintenance means for, if it is determined that the transmission (33) is performing the shift operation, maintaining the opening degree of the bypass valve (44) at an opening degree set immediately before it is determined that the transmission (33) is performing the shift operation.

2. The exhaust gas recirculation apparatus according to claim 1, wherein
when a first condition is satisfied, it is determined that the transmission (33) is performing the shift operation; and
the first condition is a condition that the transmission (33) is in the neutral state and a vehicle speed is equal to or higher than a predetermined speed.

3. The exhaust gas recirculation apparatus according to claim 1, wherein
the transmission (33) is a manual transmission (33);
when a second condition is satisfied, it is determined that the transmission (33) is performing the shift operation; and
the second condition is a condition that a depression amount of an accelerator pedal (42) is equal to or smaller than a predetermined amount, a vehicle speed is equal to or higher than a predetermined speed, and deceleration fuel cutoff is not being performed.

4. The exhaust gas recirculation apparatus according to claim 1, wherein
the transmission (33) is a manual transmission (33); and
when a first condition or a second condition is satisfied, it is determined that the transmission (33) is performing the shift operation; and
the first condition is a condition that the transmission (33) is in the neutral state and a vehicle speed is equal to or higher than a predetermined speed, and the second condition is a condition that a depression amount of an accelerator pedal (42) is equal to or smaller than a predetermined amount, a vehicle speed is equal to or higher than a predetermined speed, and deceleration fuel cutoff is not being performed.

5. The exhaust gas recirculation apparatus according to claim 3 or 4, wherein
when a predetermined time (Tα) has elapsed since start of maintenance of the opening degree of the bypass valve (44), the opening degree maintenance means stops the maintenance of the opening degree of the bypass valve (44).

6. The exhaust gas recirculation apparatus according to any one of claims 1 to 5,
when a state of the transmission (33) is changed from the neutral state to a non-neutral state, the opening degree maintenance means stops maintenance of the opening degree of the bypass valve (44).

7. The exhaust gas recirculation apparatus according to any one of claims 1 to 6, wherein
the internal combustion engine (10) is a diesel engine.

8. The exhaust gas recirculation apparatus according to claim 7, wherein
the exhaust gas recirculation passage (23) further includes an exhaust gas recirculation valve (27) that adjusts an amount of the exhaust gas introduced from the exhaust system to the intake system, and exhaust gas recirculation valve control means for setting an opening degree of the exhaust gas recirculation valve (27) according to an engine operating state; and
while the opening degree maintenance means is maintaining the opening degree of the bypass valve (44), the exhaust gas recirculation valve control means controls the opening degree of the exhaust gas recirculation valve (27) to a value smaller than the opening degree set according to the engine operating state.

9. The exhaust gas recirculation apparatus according to claim 8, wherein
while the opening degree maintenance means is maintaining the opening degree of the bypass valve (44), the exhaust gas recirculation valve control means controls the opening degree of the exhaust gas recirculation valve (27) to a predetermined value (epegfinα) that is smaller than an opening degree corresponding to a fully-opened state by a predetermined decrease amount (Δepegfin), and that is larger than an opening degree corresponding to a fully-closed state.

10. The exhaust gas recirculation apparatus according to claim 9, wherein
the predetermined decrease amount (Δepegfin) is variably set based on a temperature of the exhaust gas.

11. A method of controlling an exhaust gas recirculation apparatus (20) applied to an internal combustion engine (10) connected to a transmission (33), wherein when the transmission is placed in a neutral state while the transmission is performing a shift operation, an engine load is temporarily decreased; the exhaust gas recirculation apparatus includes an exhaust gas recirculation passage (23) through which part of exhaust gas is introduced from an exhaust system (18) to an intake system (111), a cooler (24) which is provided in the exhaust gas recirculation passage, and which cools the exhaust gas, a bypass passage (25) through which the exhaust gas is introduced from the exhaust system to the intake system without passing through the cooler, and a bypass valve (44) provided in the bypass passage; and an amount of the exhaust gas lowing through the cooler and an amount of the exhaust gas flowing through the bypass passage are adjusted by changing an opening degree of the bypass valve, the method being **characterized by** comprising:
setting the opening degree of the bypass valve (44) based on the engine load;
determining whether the transmission (33) is performing the shift operation; and
if it is determined that the transmission (33) is performing the shift operation, maintaining the opening degree of the bypass valve (44) at an opening degree set immediately before it is determined that the transmission (33) is performing the shift operation.

12. The method according to claim 11, **characterized by** further comprising:
determining whether a predetermined time (Tα) has elapsed since start of maintenance of the opening degree of the bypass valve (44); and
stopping the maintenance of the opening degree of the bypass valve (44), if it is determined that the predetermined time (Tα) has elapsed since start of the maintenance of the opening degree of the bypass valve (44).

13. The method according to claim 11, **characterized by** further comprising:
determining whether a state of the transmission (33) has been changed from the neutral state to a non-neutral state; and
stopping maintenance of the opening degree of the bypass valve (44), if it is determined that the state of the transmission (33) has been changed from the neutral state to the non-neutral state.

14. The method according to any one of claims 11 to 13, wherein
the exhaust gas recirculation passage (23) further includes an exhaust gas recirculation valve (27) that adjusts an amount of the exhaust gas introduced from the exhaust system to the intake system; and
the method further comprises:
setting an opening degree of the exhaust gas recirculation valve (27) according to an engine operating state;
determining whether the opening degree of the bypass valve (44) is being maintained;
executing a control that decreases the opening degree of the exhaust gas recirculation valve (27) to a value smaller than the opening degree set according to the engine operating state, if it is determined that the opening degree of the bypass valve (44) is being maintained;
determining whether maintenance of the opening degree of the bypass valve (44) has been stopped; and
ending the control, if it is determined that the maintenance of the opening degree of the bypass valve (44) has been stopped.

## Patentansprüche

1. Abgasrückführungsvorrichtung (20), die auf eine Verbrennungskraftmaschine (10) angewendet wird, die mit einem Getriebe (33) verbunden ist, wobei, wenn das Getriebe in einen neutralen Zustand versetzt wird, während das Getriebe einen Schaltvorgang durchführt, eine Motorlast zeitweilig vermindert wird, wobei die Abgasrückführungsvorrichtung einen Abgasrückführungsdurchgang (23), durch den ein Teil des Abgases aus einer Abgasanlage (18) in eine Ansauganlage (11) eingeleitet wird, einen Kühler (24), der in dem Abgasrückführungsdurchgang bereitgestellt wird und der das Abgas kühlt, einen Umgehungsdurchgang (25), durch den das Abgas aus der Abgasanlage in die Ansauganlage eingeleitet wird, ohne durch den Kühler hindurchzugehen, und ein Umgehungsventil (44), das in dem Umgehungsdurchgang bereitgestellt wird, einschließt, und eine Menge des Abgases, das durch den Kühler strömt, und eine Menge des Abgases, das durch den Umgehungsdurchgang strömt, eingestellt werden durch das Verändern eines Öffnungsgrades des Umgehungsventils auf der Grundlage der Motorlast, wobei die Abgasrückführungsvorrichtung **dadurch gekennzeichnet ist, dass** sie umfasst:
Öffnungsgrad-Aufrechterhaltungsmittel, um, falls festgestellt wird, dass das Getriebe (33) den Schaltvorgang durchführt, den Öffnungsgrad des Umgehungsventils (44) bei einem Öffnungsgrad aufrechtzuerhalten, der unmittelbar, bevor festgestellt wird, dass das Getriebe (33) den Schaltvorgang durchführt, festgesetzt wurde.

2. Abgasrückführungsvorrichtung nach Anspruch 1, wobei,
wenn eine erste Bedingung erfüllt ist, festgestellt wird, dass das Getriebe (33) den Schaltvorgang durchführt, und
die erste Bedingung eine Bedingung ist, dass sich das Getriebe (33) in dem neutralen Zustand befindet und eine Fahrzeuggeschwindigkeit gleich einer vorbestimmten Geschwindigkeit oder höher als dieselbe ist.

3. Abgasrückführungsvorrichtung nach Anspruch 1, wobei
das Getriebe (33) ein Handschaltgetriebe (33) ist,
wenn eine zweite Bedingung erfüllt ist, festgestellt wird, dass das Getriebe (33) den Schaltvorgang durchführt, und
die zweite Bedingung eine Bedingung ist, dass ein Maß des Niederdrückens eines Gaspedals (42) gleich einem vorbestimmten Maß oder kleiner als dasselbe ist, eine Fahrzeuggeschwindigkeit gleich einer vorbestimmten Geschwindigkeit oder höher als dieselbe ist und eine Verzögerungskraftstoffabschaltung nicht durchgeführt wird.

4. Abgasrückführungsvorrichtung nach Anspruch 1, wobei,
wenn eine erste Bedingung oder eine zweite Bedingung erfüllt ist, festgestellt wird, dass das Getriebe (33) den Schaltvorgang durchführt, und
die erste Bedingung eine Bedingung ist, dass sich das Getriebe (33) in dem neutralen Zustand befindet und eine Fahrzeuggeschwindigkeit gleich einer vorbestimmten Geschwindigkeit oder höher als dieselbe ist, und die zweite Bedingung eine Bedingung ist, dass ein Maß des Niederdrückens eines Gaspedals (42) gleich einem vorbestimmten Maß oder kleiner als dasselbe ist, eine Fahrzeuggeschwindigkeit gleich einer vorbestimmten Geschwindigkeit oder höher als dieselbe ist und eine Verzögerungskraftstoffabschaltung nicht durchgeführt wird.

5. Abgasrückführungsvorrichtung nach Anspruch 3 oder 4, wobei,
wenn eine vorbestimmte Zeit (Tα) seit dem Beginn des Aufrechterhaltens des Öffnungsgrades des Umgehungsventils (44) abgelaufen ist, die Öffnungsgrad-Aufrechterhaltungsmittel das Aufrechterhalten des Öffnungsgrades des Umgehungsventils (44) beenden.

6. Abgasrückführungsvorrichtung nach einem der Ansprüche 1 bis 5, wobei,
wenn ein Zustand des Getriebes (33) von dem neutralen Zustand zu einem nicht-neutralen Zustand verändert wird, die Öffnungsgrad-Aufrechterhaltungsmittel das Aufrechterhalten des Öffnungsgrades des Umgehungsventils (44) beenden.

7. Abgasrückführungsvorrichtung nach einem der Ansprüche 1 bis 6, wobei die Verbrennungskraftmaschine (10) ein Dieselmotor ist.

8. Abgasrückführungsvorrichtung nach Anspruch 7, wobei
der Abgasrückführungsdurchgang (23) ferner ein Abgasrückführungsventil (27), das eine Menge des Abgases, das aus der Abgasanlage in die Ansauganlage eingeleitet wird, einstellt, und Abgasrückführungsventil-Steuermittel zum Festsetzen eines Öffnungsgrades des Abgasrückführungsventils (27) entsprechend einem Motorbetriebszustand einschließt und,
während die Öffnungsgrad-Aufrechterhaltungsmittel den Öffnungsgrad des Umgehungsventils (44) aufrechterhalten, die Abgasrückführungsventil-Steuermittel den Öffnungsgrad des Abgasrückführungsventils (27) auf einen Wert steuern, der kleiner ist als der entsprechend dem Motorbetriebszustand festgesetzte Öffnungsgrad.

9. Abgasrückführungsvorrichtung nach Anspruch 8, wobei,
während die Öffnungsgrad-Aufrechterhaltungsmittel den Öffnungsgrad des Umgehungsventils (44) aufrechterhalten, die Abgasrückführungsventil-Steuermittel den Öffnungsgrad des Abgasrückführungsventils (27) auf einen vorbestimmten Wert (epegfinα) steuern, der um ein vorbestimmtes Verminderungsmaß (Δepegfin) kleiner ist als der Öffnungsgrad, der einem vollständig geöffneten Zustand entspricht, und der größer ist als ein Öffnungsgrad, der einem vollständig geschlossenen Zustand entspricht.

10. Abgasrückführungsvorrichtung nach Anspruch 9, wobei
das vorbestimmte Verminderungsmaß (Δepegfin) auf der Grundlage einer Temperatur des Abgases veränderlich festgesetzt wird.

11. Verfahren zum Steuern einer Abgasrückführungsvorrichtung (20), die auf eine Verbrennungskraftmaschine (10) angewendet wird, die mit einem Getriebe (33) verbunden ist, wobei, wenn das Getriebe in einen neutralen Zustand versetzt wird, während das Getriebe einen Schaltvorgang durchführt, eine Motorlast zeitweilig vermindert wird, wobei die Abgasrückführungsvorrichtung einen Abgasrückführungsdurchgang (23), durch den ein Teil des Abgases aus einer Abgasanlage (18) in eine Ansauganlage (11) eingeleitet wird, einen Kühler (24), der in dem Abgasrückführungsdurchgang bereitgestellt wird und der das Abgas kühlt, einen Umgehungsdurchgang (25), durch den das Abgas aus der Abgasanlage in die Ansauganlage eingeleitet wird, ohne durch den Kühler hindurchzugehen, und ein Umgehungsventil (44), das in dem Umgehungsdurchgang bereitgestellt wird, einschließt, und eine Menge des Abgases, das durch den Kühler strömt, und eine Menge des Abgases, das durch den Umgehungsdurchgang strömt, eingestellt werden durch das Verändern eines Öffnungsgrades des Umgehungsventils, wobei das Verfahren **dadurch gekennzeichnet ist, dass** es umfasst:
Festsetzen des Öffnungsgrades des Umgehungsventils (44) auf der Grundlage der Motorlast,
Feststellen, ob das Getriebe (33) den Schaltvorgang durchführt, und,
falls festgestellt wird, dass das Getriebe (33) den Schaltvorgang durchführt, das Aufrechterhalten des Öffnungsgrades des Umgehungsventils (44) bei einem Öffnungsgrad, der unmittelbar, bevor festgestellt wird, dass das Getriebe (33) den Schaltvorgang durchführt, festgesetzt wurde.

12. Verfahren nach Anspruch 11, **dadurch gekennzeichnet, dass** es ferner umfasst:
Feststellen, ob eine vorbestimmte Zeit (Tα) seit dem Beginn des Aufrechterhaltens des Öffnungsgrades des Umgehungsventils (44) abgelaufen ist, und
Beenden des Aufrechterhaltens des Öffnungsgrades des Umgehungsventils (44), falls festgestellt wird, dass die vorbestimmte Zeit (Tα) seit dem Beginn des Aufrechterhaltens des Öffnungsgrades des Umgehungsventils (44) abgelaufen ist.

13. Verfahren nach Anspruch 11, **dadurch gekennzeichnet, dass** es ferner umfasst
Feststellen, ob ein Zustand des Getriebes (33) von dem neutralen Zustand zu einem nicht-neutralen Zustand verändert worden ist, und
Beenden des Aufrechterhaltens des Öffnungsgrades des Umgehungsventils (44), falls festgestellt wird, dass der Zustand des Getriebes (33) von dem neutralen Zustand zu dem nicht-neutralen Zustand verändert worden ist.

14. Verfahren nach einem der Ansprüche 11 bis 13, wobei
der Abgasrückführungsdurchgang (23) ferner ein Abgasrückführungsventil (27) einschließt, das eine Menge des Abgases, das aus der Abgasanlage in die Ansauganlage eingeleitet wird, einstellt, und
das Verfahren ferner umfasst:
Festsetzen eines Öffnungsgrades des Abgasrückführungsventils (27) entsprechend einem Motorbetriebszustand,
Feststellen, ob der Öffnungsgrad des Umgehungsventils (44) aufrechterhalten wird,
Ausführen einer Steuerung, die den Öffnungsgrad des Abgasrückführungsventils (27) auf einen Wert vermindert, der kleiner ist als der entsprechend dem Motorbetriebszustand festgesetzte Öffnungsgrad, falls festgestellt wird, dass der Öffnungsgrad des Umgehungsventils (44) aufrechterhalten wird,
Feststellen, ob das Aufrechterhalten des Öffnungsgrades des Umgehungsventils (44) beendet worden ist, und
Beenden der Steuerung, falls festgestellt wird, dass das Aufrechterhalten des Öffnungsgrades des Umgehungsventils (44) beendet worden ist.

## Revendications

1. Appareil de recyclage de gaz d'échappement (20) appliqué à un moteur à combustion interne (10) relié à une transmission (33), dans lequel, quand la transmission est mise au point mort tandis que la transmission réalise une opération de changement de vitesse, une charge de moteur est temporairement diminuée ; l'appareil de recyclage de gaz d'échappement comprend un passage de recyclage de gaz d'échappement (23) par l'intermédiaire duquel une partie de gaz d'échappement est introduite depuis un système d'échappement (18) dans un système d'alimentation (11), un dispositif de refroidissement (24) qui est prévu dans le passage de recyclage de gaz d'échappement, et qui refroidit le gaz d'échappement, un passage de dérivation (25) par l'intermédiaire duquel le gaz d'échappement est introduit depuis le dispositif d'échappement dans le système d'alimentation sans passer par le dispositif de refroidissement, et une soupape de dérivation (44) prévue dans le passage de dérivation ; et une quantité du gaz d'échappement qui s'écoule à travers le dispositif de refroidissement et une quantité du gaz d'échappement qui s'écoule à travers le passage de dérivation sont ajustées en changeant un degré d'ouverture de la soupape de dérivation sur la base de la charge de moteur, l'appareil de recyclage de gaz d'échappement étant **caractérisé en ce qu'**il comporte :
des moyens de maintien de degré d'ouverture destinés, si l'on détermine que la transmission (33) réalise l'opération de changement de vitesse, à maintenir le degré d'ouverture de la soupape de dérivation (44) à un degré d'ouverture établi immédiatement avant que l'on détermine que la transmission (33) réalise l'opération de changement de vitesse.

2. Appareil de recyclage de gaz d'échappement selon la revendication 1, dans lequel, quand une première condition est satisfaite, on détermine que la transmission (33) réalise une opération de changement de vitesse ; et
la première condition est une condition dans laquelle la transmission (33) est au point mort et une vitesse de véhicule est égale ou supérieure à une vitesse prédéterminée.

3. Appareil de recyclage de gaz d'échappement selon la revendication 1, dans lequel la transmission (33) est une transmission manuelle (33) ;
quand une deuxième condition est satisfaite, on détermine que la transmission (33) réalise l'opération de changement de vitesse ; et
la deuxième condition est une condition selon laquelle une quantité d'enfoncement d'une pédale d'accélérateur (42) est égale ou inférieure à une quantité prédéterminée, une vitesse de véhicule est égale ou supérieure à une vitesse prédéterminée, et une coupure de carburant à la décélération n'est pas réalisée.

4. Appareil de recyclage de gaz d'échappement selon la revendication 1, dans lequel
la transmission (33) est une transmission manuelle (33) ; et
quand une première condition ou une deuxième condition est satisfaite, on détermine que la transmission (33) réalise l'opération de changement de vitesse ; et
la première condition est une condition selon laquelle la transmission (33) est au point mort et une vitesse de véhicule est égale ou supérieure à une vitesse prédéterminée, et la deuxième condition est une condition selon laquelle une quantité d'enfoncement d'une pédale d'accélérateur (42) est égale ou inférieure à une quantité prédéterminée, une vitesse de véhicule est égale ou supérieure à une vitesse prédéterminée, et la coupure de carburant à la décélération n'est pas réalisée.

5. Appareil de recyclage de gaz d'échappement selon la revendication 3 ou 4, dans lequel
quand un temps prédéterminé (Tα) s'est écoulé depuis le début du maintien du degré d'ouverture de la soupape de dérivation (44), les moyens de maintien de degré d'ouverture arrêtent le maintien du degré d'ouverture de la soupape de dérivation (44).

6. Appareil de recyclage de gaz d'échappement selon l'une quelconque des revendications 1 à 5,
quand un état de la transmission (33) est changé de l'état de point mort à un état qui n'est pas le point mort, les moyens de maintien de degré d'ouverture arrêtent le maintien du degré d'ouverture de la soupape de dérivation (44).

7. Appareil de recyclage de gaz d'échappement selon l'une quelconque des revendications 1 à 6, dans lequel
le moteur à combustion interne (10) est un moteur diesel.

8. Appareil de recyclage de gaz d'échappement selon la revendication 7, dans lequel
le passage de recyclage de gaz d'échappement (23) comprend en outre une soupape de recyclage de gaz d'échappement (27) qui ajuste une quantité du gaz d'échappement introduit depuis le dispositif d'échappement dans le système d'alimentation, et des moyens de commande de soupape de recyclage de gaz d'échappement destinés à établir un degré d'ouverture de la soupape de recyclage de gaz d'échappement (27) en fonction d'un état de fonctionnement de moteur ; et
tandis que les moyens de maintien de degré d'ouverture maintiennent le degré d'ouverture de la soupape de dérivation (44), les moyens de commande de soupape de recyclage de gaz d'échappement commandent le degré d'ouverture de la soupape de recyclage de gaz d'échappement (27) à une valeur plus petite que le degré d'ouverture établi en fonction de l'état de fonctionnement de moteur.

9. Appareil de recyclage de gaz d'échappement selon la revendication 8, dans lequel
tandis que les moyens de maintien de degré d'ouverture maintiennent le degré d'ouverture de la soupape de dérivation (44), les moyens de commande de soupape de recyclage de gaz d'échappement commandent le degré d'ouverture de la soupape de recyclage de gaz d'échappement (27) à une valeur prédéterminée (epegfinα) qui est plus petite qu'un degré d'ouverture correspondant à un état de pleine ouverture par une quantité de diminution prédéterminée (Δepegfin), et qui est plus grande qu'un degré d'ouverture correspondant à un état complètement fermé.

10. Appareil de recyclage de gaz d'échappement selon la revendication 9, dans lequel la quantité prédéterminée de diminution (Δepegfin) est établie de manière variable sur la base d'une température du gaz d'échappement.

11. Procédé de commande d'un appareil de recyclage de gaz d'échappement (20) appliqué à un moteur à combustion interne (10) relié à une transmission (33), dans lequel, quand la transmission est mise au point mort tandis que la transmission réalise une opération de changement de vitesse, une charge de moteur est temporairement diminuée ; l'appareil de recyclage de gaz d'échappement comprend un passage de recyclage de gaz d'échappement (23) par l'intermédiaire duquel une partie de gaz d'échappement est introduite depuis un système d'échappement (18) dans un système d'alimentation (11), un dispositif de refroidissement (24) qui est prévu dans le passage de recyclage de gaz d'échappement, et qui refroidit le gaz d'échappement, un passage de dérivation (25) par l'intermédiaire duquel le gaz d'échappement est introduit depuis le dispositif d'échappement dans le système d'alimentation sans passer par le dispositif de refroidissement, et une soupape de dérivation (44) prévue dans le passage de dérivation ; et une quantité du gaz d'échappement qui s'écoule à travers le dispositif de refroidissement et une quantité du gaz d'échappement qui s'écoule à travers le passage de dérivation sont ajustées en changeant un degré d'ouverture de la soupape de dérivation, le procédé étant **caractérisé en ce qu'**il comporte le fait de :
établir le degré d'ouverture de la soupape de dérivation (44) sur la base de la charge de moteur ;
déterminer si la transmission (33) réalise l'opération de changement de vitesse ; et
si il est déterminé que la transmission (33) réalise l'opération de changement de vitesse, maintenir le degré d'ouverture de la soupape de dérivation (44) à un degré d'ouverture établi immédiatement avant que l'on détermine que la transmission (33) réalise l'opération de changement de vitesse.

12. Procédé selon la revendication 11, **caractérisé en ce qu'**il comprend en outre le fait de :
déterminer si un temps prédéterminé (Tα) s'est écoulé depuis le début du maintien du degré d'ouverture de la soupape de dérivation (44) ; et
arrêter le maintien du degré d'ouverture de la soupape de dérivation (44), si il est déterminé que le temps prédéterminé (Tα) s'est écoulé depuis le début du maintien du degré d'ouverture de la soupape de dérivation (44).

13. Procédé selon la revendication 11, **caractérisé en ce qu'**il comprend en outre le fait de :
déterminer si un état de la transmission (33) a été changé de l'état de point mort à un état qui n'est pas le point mort ; et
arrêter le maintien du degré d'ouverture de la soupape de dérivation (44), si il est déterminé que l'état de la transmission (33) a été changé de l'état de point mort à un état qui n'est pas le point mort.

14. Procédé selon l'une quelconque des revendications 11 à 13, selon lequel
le passage de recyclage de gaz d'échappement (23) comprend en outre une soupape de recyclage de gaz d'échappement (27) qui ajuste une quantité du gaz d'échappement introduit depuis le dispositif d'échappement dans le système d'alimentation ; et
le procédé comprend en outre le fait de :
établir un degré d'ouverture de la soupape de recyclage de gaz d'échappement (27) en fonction d'un état de fonctionnement de moteur ;
déterminer si le degré d'ouverture de la soupape de dérivation (44) est maintenu ;
réaliser une commande qui diminue le degré d'ouverture de la soupape de recyclage de gaz d'échappement (27) à une valeur plus petite que le degré d'ouverture établi en fonction de l'état de fonctionnement de moteur, si il est déterminé que le degré d'ouverture de la soupape de dérivation (44) est maintenu ;
déterminer si le maintien du degré d'ouverture de la soupape de dérivation (44) a été arrêté ; et
terminer la commande, si il est déterminé que le maintien du degré d'ouverture de la soupape de dérivation (44) a été arrêté.
